# EUROPÄISCHE PATENTSCHRIFT

(11) **EP 0 444 308 B1**
(45) Veröffentlichungstag und Bekanntmachung des Hinweises auf die Patenterteilung: **26.05.1993**
(21) Anmeldenummer: 90125412.8
(22) Anmeldetag: 24.12.1990
(51) Int. Cl.: F24D 19/10, G05D 23/19, F24H 9/00, F24D 19/00

(54) **Verfahren zum Eingeben und Verändern von Programmdaten eines Heizungsreglers**
Method of putting in and changing programme data of a heating controller
Procédé pour introduire et changer des données de programme d'un régulateur de chauffage

(30) Priorität: 27.03.1990 DE 4009774; 15.10.1990 DE 4032650; 13.06.1990 DE 4018855; 02.03.1990 DE 4006494
(43) Veröffentlichungstag der Anmeldung: 04.09.1991
(73) Patentinhaber: Buderus Heiztechnik GmbH, D-35576 Wetzlar (DE)
(72) Erfinder: Abel, Helmut, W-6301 Staufenberg (DE); Freund, Jürgen, Dipl.-Ing., W-6349 Greifenstein (DE); Hahnel, Reinhard, Dipl.-Ing., W-6304 Lollar (DE); Jakob, Rainer, Dipl.-Ing., W-6302 Lich (DE); Lennarz, Klaus, W-6304 Lollar (DE); Parma, Wolfram, Dipl.-Ing., W-6313 Homberg/Ohm (DE); Pohla, Heinz, Dipl.-Ing., W-6330 Wetzlar (DE); Rogler, Horst, W-6290 Weilburg (DE)

(56) Entgegenhaltungen:
- DE-A- 3 217 068
- GB-A- 2 137 770

## Beschreibung

Die Erfindung betrifft ein Verfahren nach dem Oberbegriff des Patentanspruches 1. Die Regelung einer Heizungsanlage mit einem über die Länge eines Tages veränderlichen Raumtemperaturprofil gehört zum altbekannten Stand der Technik. In der einfachsten Form handelt es sich dabei um eine Absenkung der Raumtemperatur gegenüber dem festgelegten Tagessollwert. Diese Absenkung kann sowohl nachts als auch während bestimmter Tageszeiten vorgenommen werden.

In der DE-A-3217068 ist ein Verfahren beschrieben, bei dem das Eingeben der Daten zum Erstellen eines Tages-Basisprofils während des Tagesverlaufes erfolgt.

Es besteht auch die Möglichkeit, nicht nur die Solltemperatur während bestimmter Zeiten abzusenken, sondern während der Nutzungsdauer unterschiedliche Raumtemperatursollwerte einzustellen. Auf diese Weise können je nach den individuellen Bedürfnissen unterschiedliche Raumtemperaturen erzielt werden. Diese Bedürfnisse können nämlich abends anders sein als morgens oder während der Mittagszeit.

Die Einstellung unterschiedlicher Raumtemperatursollwerte während des Tagesablaufs ist durch entsprechende Programmeingaben in den Regler möglich. Diese Eingaben können nur von einem Fachmann oder einem fachkundigen Anlagenbetreiber vorgenommen werden. Das gilt erst recht dann, wenn gewünschte Änderungen eine neue Programmierung der Schaltzeiten und der Solltemperaturen erforderlich machen.

Das bisher recht schwierige und umständliche Eingeben von tageszeitlich veränderlichen Programmdaten in einen Heizungsregler soll vereinfacht werden. Insbesondere soll es dem Betreiber der Anlage ermöglicht werden, ohne jegliche Anleitung sein individuelles Programm einzugeben und bei Bedarf nachträglich zu ändern.

Das erfindungsgemäße Verfahren besteht in einer Anwendung der im Kennzeichen des Patentanspruches 1 genannten Maßnahmen.

Der Betreiber stellt an einem Einstellgerät einfach ein, welche Raumtemperatur er ab welcher Tageszeit wünscht. Der Heizungsregler übernimmt dann diese Werte als ein gültiges Tages-Basisprofil. Das bisherige Programmieren ist somit durch ein einfaches, vorzugsweise über den Tagesablauf verteiltes Eingabeverfahren ersetzt. Hierfür sind keine Vorkenntnisse erforderlich.

Grundsätzlich könnte ein einmaliger Eingabezyklus als fertiges Tages-Basisprofil festgelegt und vom Heizungsregler festgeschrieben werden. In der Praxis empfiehlt es sich jedoch, dem Heizungsregler eine Lernphase von einigen Tagen zu geben. Dadurch erhält der Betreiber die Möglichkeit, Fehleingaben vor der Festschreibung zu korrieren. Eine der Möglichkeiten besteht darin, daß der Betreiber an einem der folgenden Tage der Lernphase etwa um dieselbe Zeit denselben Temperaturwert erneut eingibt. Der Heizungsregler ordnet eine bestimmte Zeitspanne dem ursprünglichen Eingabezeitpunkt zu und betrachtet die erneute Eingabe als Bestätigung. Eine andere Möglichkeit beteht darin, daß der Betreiber an einem der folgenden Tagen der Lernphase etwa um diese Zeit einen anderen Temperaturwert eingibt. Der Heizungsregler betrachtet diese Eingabe dann als Korrektur. Nach Abschluß der Lernphase wird das bestätigte oder korrigierte Tages-Basisprofil festgeschrieben, wobei die Festschreibung auch in der erstmals eingegebenen Form erfolgen kann, wenn nach einigen Tagen keine Bestätigung oder Korrektur erfolgte.

Das Eingeben des Tages-Basisprofils kann mit einer Gültigkeit für alle Tage erfolgen. Es ist auch möglich, montags ein Tages-Basisprofil für den Block der Arbeitstage einzugeben und dieses am folgenden Montag zu bestätigen bzw. zu korrigieren. Samstags könnte dann ein anderes Tages-Basisprofil für den Block der beiden arbeitsfreien Tage eingegeben und am folgenden Samstag bestätigt bzw. korrigiert werden. Auch Tages-Basisprofile, die nur für einen bestimmten Wochentag Gültigkeit haben, sind möglich, indem die Eingaben am folgenden, entsprechenden Wochentag bestätigt bzw. korrigiert werden. Für die ordnungsgemäße Handhabung empfiehlt sich deshalb eine Lernphase von 2 Wochen, damit jedes eingegebene Tages-Basisprofil noch einmal bestätigt oder korrigiert werden kann, bevor die Festschreibung erfolgt. Nach Abschluß der Lernphase gelten Änderungseingaben nur noch für diesen einzigen Tag. Das programmierte Tages-Basisprofil bleibt hingegen bestehen. Soll die nachträgliche Änderung auch in das Tages-Basisprofil aufgenommen werden, dann ist dem Heizungsregler die ausdrückliche Anweisung zur Aufnahme des geänderten Schaltpunktes und Temperaturwertes zu geben. Somit ist auch die nachträgliche Änderung gegenüber dem bisherigen Programmierverfahren wesentlichvereinfacht.

Es ist bekannt, Veränderungen der Raumtemperatur optimierend zu regeln, damit zu dem festgelegten Zeitpunkt der gewünschte Temperaturwert tatsächlich vorliegt. Alle im Tages-Basisprofil festgelegten Schaltpunkte können selbstverständlich optimierend angefahren werden.

Durch das festgeschriebene Tages-Basisprofil entstehen über den Tagesablauf wechselnde Betriebsarten. Jede dieser Betriebsarten ist so eingerichtet, daß festgelegte Raumtemperatur-Sollwerte erreicht werden, wobei der Sollwert während der Absenkphase in der Regel etwa 6 °C niedriger liegt als während der Heizphase.

Werden während einer Betriebsphase nicht die festgelegten Temperaturwerte gewünscht, dann muß ein entsprechender Eingriff erfolgen. Das kann abends der Fall sein, wenn über die zeitlich festgelegte Heizphase hinaus oder während eines abgesenkten Betriebes geheizt werden soll. Das kann auch am Tag gewünscht sein, wenn die Raumtemperatur niedriger liegen soll als es durch die gültige Betriebsart festgelegt ist.

Es gibt mehrere bekannte Möglichkeiten, während einer zeitlich festgelegten Betriebsart das Leistungsangebot und damit die Vorlauftemperatur eines Heizungskessels zu verändern. So könnte man für den besonderen Bedarfsfall das Zeit-Programm in der Kesselregelung entsprechend ändern. Das ist aufwendig und für Ausnahmen nicht sinnvoll, da anschließend ja erneut eine Programmänderung erfolgen muß. Häufiger ist es üblich, mit einem Handschalter auf die andere Betriebsart umzuschalten. So wäre dann beispielsweise während der Absenkzeit dennoch der Heizbetrieb in Tätigkeit.

Da jetzt jedoch das eingegebene Tages-Basisprofil nicht mehr gültig ist, ist ein Zurückschalten von Hand erforderlich. Das wird oft vergessen. Eine weitere Möglichkeit besteht schließlich darin, für die gerade gültige Betriebsart den Sollwert der Vorlauftemperatur zu verändern. Aber auch diese Änderung muß wieder rückgängig gemacht werden, da der Heizungskessel sonst dauerhaft mit dieser geänderten Solltemperatur gefahren würde.

Zum bedarfsweisen Verändern der durch die jeweilige Betriebsart festgelegten Vorlauftemperatur wird gemäß einem besonderen Kennzeichen der Erfindung vorgeschlagen, daß an einer Fernbedienung die im Raum gewünschte Solltemperatur eingestellt und mit ihr der Wert des Programms überschrieben und die Überschreibung spätestens durch den Abschluß der Betriebsart aufgehoben wird.

Das Besondere an dieser Maßnahme liegt darin, daß nicht in den Regelkreis selbst eingegriffen wird, was umständlich ist und anschließend rückgängig gemacht werden muß. Es erfolgt weder eine Änderung des Regelprogrammes in Form des festgeschriebenen Tages-Basisprofils durch andere Zeit- oder Temperatureingaben noch ein Umschalten von einer Betriebsart auf eine andere. Es wird vielmehr an einem Fernbedienungsgerät nur der Sollwert für die Raumtemperatur verändert und diese Änderung spätestens am Ende der betreffenden Betriebsart selbsttätig wieder aufgehoben.

Das Festlegen des Sollwertes könnte man als Initialisierung bezeichnen. Anschließend befindet sich das festgeschriebene Programm im Anzeigemodus. Wird nun durch das Einstellelement der Sollwert der Raumtemperatur verändert, so wird für die gerade gültige Betriebsart ohne Eingriff in das gültige Programm der eingegebene Initialisierungswert durch den neuen Sollwert überschrieben. Der alte Sollwert bleibt aber erhalten und tritt spätestens am Ende der betreffenden Betriebsart wieder in Funktion.

Um nicht das Ende der Betriebsart abzuwarten, ist es auch möglich, gleichzeitig mit dem Ändern des Sollwertes die Zeitspanne einzugeben, für die diese Änderung gelten soll.

Ein weiteres Problem besteht dann, wenn nicht nur sporadische, sondern periodische Abweichungen von dem festgelegten Wochenprogramm gewünscht werden. Bei den herkömmlichen Regelungen wären regelmäßige Eingriffe oder Programmänderungen notwendig, was nicht nur umständlich ist, sondern auch häufig zu Fehleinstellungen führen kann. Periodisch wiederkehrende Veränderungen des Heizbedürfnisses können ohne fortwährende Eingriffe in das festgelegte Programm befriedigt werden, indem dem vorhandenen Programm mindestens ein weiteres, ebenfalls für einen festgelegten Zeitraum gültiges Programm zugeordnet und bei Bedarf eine Umschaltung von einem Programm auf das andere vorgenommen wird. Das hat den Vorteil, daß separate Eingriffe entfallen. Der Betreiber legt einmal die Daten der unterschiedlichen Programme anhand von Tages-Basisprofilen fest und kann dann bei Bedarf von diesem oder jenem Programm Gebrauch machen.

Die eigentliche Bedeutung besitzt diese Maßnahme für einen im Schichtbetrieb tätigen Betreiber einer Heizungsanlage. Für diesen gab es bisher keine befriedigende Lösung für einen seinen periodisch wechselnden Bedürfnissen entsprechenden Heizbetrieb. Hierfür steht jetzt die Regelung mit mindestens zwei Wochenprogrammen mit den für die betreffende Schicht erforderlichen Programmdaten zur Verfügung, wobei sogar automatisch eine periodische Umschaltung von einem Programm auf das andere erfolgen kann. Auf diese Weise wird einem echten Bedürfnis entsprochen.

In der konkreten Ausführung ist es möglich, einem Regelgerät mindestens zwei Programmspeicher zu geben. Werksseitig werden übliche Wochenprogramme eingegeben. Diese können dann mit Wahlprogrammen verbunden bzw. auf solche umgestellt werden. Eine Einrichtung zum Umschalten ermöglicht ein Umschalten von einem Programmspeicher auf den anderen. Dabei ist auch eine manuelle Umschaltung zum Umschalten von einem Normalprogramm auf ein Ferienprogramm möglich.

Bei einem Verfahren zur Regelung einer Heizungsanlage mit mindestens zwei Heizkreisen, wie es beispielsweise der DE-OS 37 13 185 zu entnehmen ist, werden bestimmte Regelfunktionen des Kessels von den Heizkreisen aus gesteuert. Hier überlagern sich mehrere Tages-Basisprofile.

Bei Mehrfamilienhäusern mit mehreren Heizkreisen kann es vorkommen, daß durch Abwesenheit einzelner oder aller Betreiber einige Heizkreise während längerer Zeit, z.B. einer länger andauernden Urlaubszeit, nicht genutzt werden. daaber in der Regel nicht alle Betreiber eine Eingriffsmöglichkeit in die Regelung der Anlage besitzen, kann es zu sehr unwirtschaftlichen Betriebsumständen kommen. Ist z.B. der Hauseigentümer abwesend, dann muß er im Interesse der übrigen Bewohner die Heizungsanlage unverändert weiter laufen lassen, obwohl einige Regelfunktionen vielleicht nur für ihn gültig sind und gar nicht notwendig wären. Gehen dann auch die übrigen Bewohner in Urlaub, die keinen Zugang zur Regelanlage besitzen, dann ergibt sich erst recht ein unnötiger Betriebszustand mit Energieverlusten.

Man könnte dem vorhandenen Problem dadurch begegnen, daß jeder Bewohner Zugang zur Regelanlage erhält und hier Eingriffe vornehmen kann. Das führt jedoch zu verwirrenden Veränderungen, zumal die Kenntnisse für ordnungsgemäße Eingriffe in das Programm meistens nicht ausreichen.

Um bei einer Heizungsanlage mit mehreren Heizkreisen und somit mehreren unterschiedlichen Tages-Basisprofilen während längerer Abwesenheit einzelner oder aller Betreiber unwirtschaftliche Betriebszustände zu vermeiden, ohne daß einer der Betreiber an der Regelungsanlage Eingriffe vornehmen muß, wird dem Regler die Abwesenheitszeit aufgeschaltet. Dieser erkennt dann selbsttätig, ob gewisse Kennwerte, die nur für diesen Heizkreis gültig sind, ausgeblendet werden können bzw. wo bei Überschneidungen von längeren Nichtnutzungszeiten ganze Regelfunktionen entfallen können. Die notwendigen Kennwerte werden automatisch den verbleibenden Heizkreisen zugeordnet. Sofern alle Heizkreise durch Aufschalten der Abwesenheitszeiten aller Betreiber auf den Regler ruhen können, wird die Anlage nur noch mit einigen Grundkennwerten betrieben. Jetzt reicht die Einhaltung einer Frostschutz- bzw. Stütztemperatur aus, während der Brenner und die Umwälzpumpe im übrigen ausgeschaltet sein können.

Die Regelung der Heizungsanlage nur nach den Kennwerten des bzw. der verbliebenen Heizkreise bringt bereits Ersparnisse, da die Betriebsbereitschaft nur auf die jeweils notwendige Betriebszeit beschränkt ist. Darüber hinaus gibt es Anlagenbereiche, die für alle Heizkreise gemeinsam sind, nämlich die Brauchwasserbereitung und die Heizwasserzirkulation. Auch deren Kennwerte werden den Kennwerten der verbliebenen Heizkreise zugeordnet. Somit werden durch ein einfaches Aufschalten der Abwesenheitszeiten auf den Regler unnötige Aktivitäten auf der Heiz- und Brauchwasserseite unterbunden. Gesonderte Eingriffe in das Regelverhalten sind nicht erforderlich.

Die beigefügte Zeichnung dient der Erläuterung der Erfindung. Es zeigt:

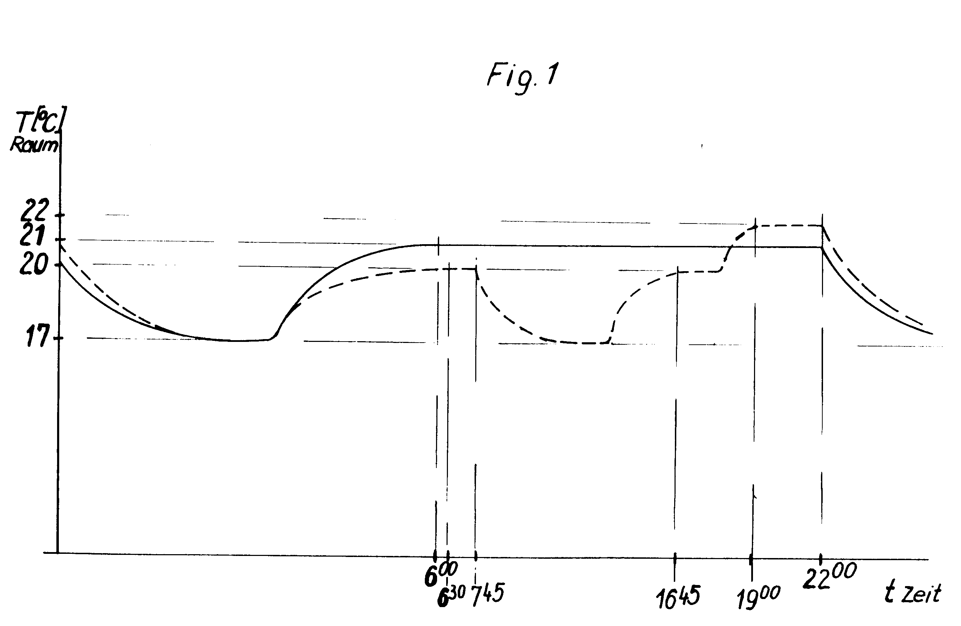

- Fig. 1: Ein Diagramm mit einem Temperatur-Zeit-Profil
- Fig. 2: Die täglichen Betriebsphasen bei vollem Betrieb einer Heizungsanlage mit zwei Heizkreisen.
- Fig. 3: Die täglichen Betriebsphasen bei der Abschaltung des ersten Heizkreises.
- Fig. 4: Die täglichen Betriebsphasen bei der Abschaltung des zweiten Heizkreises und
- Fig. 5: Die täglichen Betriebsphasen (falls erforderlich) bei der Abschaltung beider Heizkreise.

Der Heizungsregler ist werksseitig so programmiert, daß morgens um 6.00 Uhr eine Raumtemperatur von 21 °C erreicht wird, die nach 22.00 Uhr auf eine Absenktemperatur von 17 °C abfällt (ausgezogene Linie im Diagramm). Der Betreiber möchte, daß um 6.30 Uhr der Sollwert auf 20 °C liegt. Er stellt diesen Wert am Einstellgerät ein. Um 7.45 Uhr verläßt er die Wohnung. Er stellt zu diesem Zeitpunkt den Sollwert am Einstellgerät auf eine abgesenkte Temperatur von 17 °C ein. Um 16.45 Uhr kommt er zurück und wünscht 20 °C, die er jetzt am Einstellgerät eingibt. Um 19.00 Uhr gibt er dann einen höheren Wert von 22 °C ein, der bis zum Ablauf des normalen Programms gilt. Automatisch übernimmt der Heizungsregler diese Daten als Tages-Basisprofil (gestrichelte Linie im Diagramm), das nach einer Lernphase von einigen Tagen infolge einer Bestätigung oder Korrektur der Werte festgeschrieben wird.

Das Einstellen der gewünschten Temperatur kann durch Eingabe der tatsächlichen Temperaturhöhe am Eingestellgerät erfolgen. Es ist auch möglich, diese Temperatur in ihrer Differenz zur Betriebstemperatur einzustellen. So könnte der Betreiber um 6.30 Uhr die eingestellte Temperatur von 21 °C einfach um 1 K erniedrigen und sie dann um 7.45 Uhr um weitere 3 K absenken. Die Funktion als solche bleibt identisch.

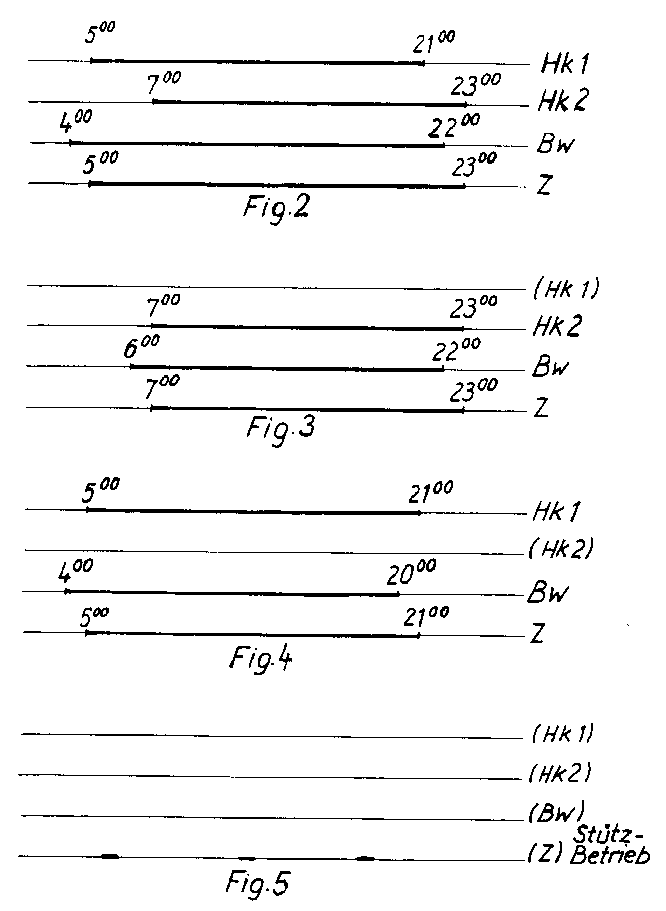

In Fig. 2 bis 5 bedeutet HK 1 = Heizkreis 1, HK 2 = Heizkreis 2, BW = Brauchwassererwärmung und Z = Zirkulation (Betrieb der gemeinsamen Heizkreispumpe).

Es wird unterstellt, daß die Brauchwassererwärmung BW 1 h vor dem Heizbetrieb beginnen soll, um den Heizbetrieb nicht durch die Aufladung des Speichers zu stören, und daß sie 1 h vor dem Abschluß des Heizbetriebes enden soll. Die Werte können auch anders sein. So kann der Beginn der Brauchwassererwärmung auch durch eine Optimierungsschaltung automatisch festgelegt werden. Es wird ferner unterstellt, daß die Zirkulation Z während des vollen Heizbetriebes in Gang ist.

Fig. 2: Der erste Heizkreis HK 1 ist von 5.00 bis 21.00 Uhr in Tätigkeit. Der zweite Heizkreis HK 2 von 7.00 bis 23.00 Uhr. Somit läuft die Zirkulation Z von 5.00 bis 23.00 Uhr. Die Brauchwassererwärmung BW beginnt um 4.00 Uhr und sie endet um 22.00 Uhr.

Fig. 3: Der Betreiber des ersten Heizkreises HK 1 geht in Urlaub. Ohne jegliche Hantierung am Regler schaltet er dem Regler seine Abwesenheit auf, vorzugsweise durch Fernbedienung. Der Regler ordnet automatisch alle Kennwerte dem verbliebenen Heizkreis HK 2 zu. Die Nutzungszeit auf der Heizungsseite und gleichzeitig die der Brauchwassererwärmung und der Zirkulation verringert sich morgens um jeweils 2 h.

Fig. 4: Nur der Betreiber des zweiten Heizkreises HK 2 hat dem Regler seine Abwesenheit aufgeschaltet. Die Betriebszeiten verringern sich abends um jeweils 2 h.

Fig. 5: Die Abwesenheit der Betreiber beidern Heizkreise HK 1 und HK 2 ist dem Regler aufgeschaltet. Dieser hat automatisch alle Funktionen unterbunden. Der Betrieb erfolgt nur noch mit einigen Grundkennwerten, nämlich zur Einhaltung eines Frostschutzes bzw. einer einzustellenden Sütztemperatur.

Es sollte nur das Prinzip erläutert werden. Die Zeiten und Zusammenhänge können auch anders sein. Die Übertragung auf noch mehr Heizkreise ist leicht darzustellen, indem alle Überschneidungen von längeren Nichtnutzungszeiten berücksichtigt werden.

## Patentansprüche

1. Verfahren zur Eingabe von Programmdaten in einen Heizungsregler für das Erstellen eines während der täglichen Nutzungsdauer einer Heizungsanlage veränderlichen Raumtemperaturprofils, wobei der Betreiber der Anlage während eines Tagesverlaufes zu festgelegten Zeitpunkten gewünschte Temperatuirwerte an einem Einstellgerät eingibt und der Heizungsregler anhand der eingestellten Werte ein Tages-Basisprofil erstellt,
dadurch gekennzeichnet, daß dieses Basisprofil nach einer Lernphase von einigen Tagen festgeschrieben wird, wenn an einem der folgenden Tage etwa um dieselbe Zeit derselbe Temperaturwert erneut eingegeben wird (Bestätigung), durch einen anderen Temperaturwert ersetzt wird (Korrektur) oder wenn nach Ablauf einer bestimmten Zeit keine Bestätigung oder Korrektur erfolgte.

2. Verfahren nach Anspruch 1,
dadurch gekennzeichnet, daß der Betreiber der Anlage während eines Tagesverlaufes zu den von ihm festgelegten Zeitpunkten die gewünschten Raumtemperaturwerte zum Erstellen des Tages-Basisprofils eingibt.

3. Verfahren nach Anspruch 2,
dadurch gekennzeichnet, daß der Heizungsregler anhand der eingegebenen Werte ein Tages-Basisprofil mit einer Gültigkeit für alle Wochentage oder nur für einen Block von Wochentagen (Arbeitstage bzw. arbeitsfreie Tage am Wochenende) oder nur für den betreffenden Wochentag erstellt und festschreibt.

4. Verfahren nach den Ansprüchen 1 bis 3,
dadurch gekennzeichnet, daß die Lernphase mindestens soviele Tage dauert, daß ein einmal erstelltes Tages-Basisprofil an einem Wiederholungstag (folgender Tag bzw. folgender, identischer Wochentag) bestätigt und korrigert werden kann, und daß nach Abschluß der Lernphase eingegebene Werte nur dann zur Korrektur des Tages-Basisprofiles dienen, wenn dem Regler eine ausdrückliche Anweisung gegeben wird, während sie im anderen Fall nur für den betreffenden Eingabetag gelten.

5. Verfahren nach Anspruch 1,
dadurch gekennzeichnet, daß zum bedarfsweisen Verändern der durch das festgeschriebene Programm in Form des Tages-Basisprofiles festgelegten Sollwertes einer Betriebsart an einer Fernbedienung die im Raum gewünschte Solltemperatur eingestellt und mit ihr der Wert des Programms überschrieben und die Überschreibung spätestens durch den Abschluß der Betriebsart wieder aufgehoben wird.

6. Verfahren nach Anspruch 5,
dadurch gekennzeichnet, daß der Fernbedienung gemeinsam mit dem Einstellen der gewünschten Solltemperatur gleichzeitig eine Zeitspanne für die Gültigkeit dieses Sollwertes eingegeben wird.

7. Verfahren nach Anspruch 1,
dadurch gekennzeichnet, daß neben dem festgeschriebenen Programm in Form eines Tages-Basisprofils für einen mehrtägigen Zeitraum, vorzugsweise über den Verlauf einer Woche, ein weiteres Programm derselben Art mit abweichenden Programmdaten erstellt und festgeschrieben wird und eine Möglichkeit zum periodischen Umschalten von einem Programm auf das andere vorhanden ist.

8. Verfahren nach Anspruch 7,
dadurch gekennzeichnet, daß bei einem in Schichtbetrieb tätigen Betreiber jeweils eines der Programme einer der Schichten zugeordnet wird und daß bei periodischem Schichtwechsel eine periodische Umschaltung der Programm erfolgt.

9. Verfahren nach Anspruch 1,
dadurch gekennzeichnet, daß bei mindestens zwei Heizkreisen während längerer Abwesenheit einzelner oder aller Betreiber jeder einzelne Betreiber seine Abwesenheitszeit dem Regler aufgeschaltet und daß während dieser Zeit die Heizungsanlage nur noch mit den Kennwerten des bzw. der verbliebenen Heizkreise oder bei Abwesenheit aller Betreiber mit einigen unbedingt erforderlichen Grundkennwerten betrieben wird.

10. Verfahren nach Anspruch 9,
dadurch gekennzeichnet, daß die Kennwerte der für alle Heizkreise gemeinsamen Anlagenbereiche (Brauchwassererwärmung und/oder Heizwasserzirkulation) den Kennwerten des bzw. der verbliebenen Heizkreise zugeordnet werden.

## Claims

1. A method for putting in and changing programme data of a heating controller for establishing a room temperature profile to be modified during the daily operation time of a heating installation, the operator of the installation putting in, during the course of the day, desired temperature values at predetermined times at an adjustment device, and the heating controller establishing a daily base profile using the adjusted values,
characterized by that said base profile is made permanent, after a learning phase of several days, if at one of the following days approximately at the same time the same temperature value is put in (confirmation), is replaced by a different temperature value (correction), or if after expiration of a certain time, no confirmation or correction has been made.

2. A method according to claim 1,
characterized by that the operator of the installation puts in, during the course of a day, the desired room temperature values at times determined by himself for establishing the daily base profile.

3. A method according to claim 2,
characterized by that the heating controller establishes and makes permanent, by using the put-in values, a daily base profile being valid for all week-days or for a block of week-days (working days or free days at the weekend) only or for the respective week-day only.

4. A method according to one of claims 1 to 3,
characterized by that the learning phase lasts at least so many days that a daily base profile once established can be confirmed or corrected at a repeating day (following day or following identical week-day), and that after termination of the learning phase, put-in values may only then serve for correction of the daily base profile, when the controller receives a specific instruction, whereas in the other case, they will be valid for the respective putting-in day only.

5. A method according to claim 1,
characterized by that for changing, if required, the desired value of an operational mode determined by the programme made permanent in the form of the daily base profile, the desired temperature for the room is adjusted at a remote controller, and thereby, the value of the programme is overwritten, and such overwriting is deleted again at the latest by termination of said operational mode.

6. A method according to claim 5,
characterized by that into the remote controller, together with the adjustment of the desired temperature, a time span for the validity of said desired value is put in.

7. A method according to claim 1,
characterized by that besides the programme made permanent in the form of a daily base profile for a period of time of several days, another programme of the same type with differing programme data is established and made permanent, and a possibility for periodically changing from one programme to the other is available.

8. A method according to claim. 7,
characterized by that for an operator working on a shift basic, one of the programmes each is assigned to one of the shifts, and that with periodical shift change, a periodical change of the programmes is made.

9. A method according to claim 1,
characterized by that with at least two heating circuits, during a longer absence of individual or all operators, each operator puts in his absence time into the controller, and that during this time, the heating installation is only operated with the characteristic data of the remaining heating circuit or circuits, resp., or with absence of all operators, is operated with a few basic characteristic data being absolutely necessary.

10. A method according to claim 9,
characterized by that the characteristic data of the installation sections being common to all heating circuits (consumption water heating and/or heating water circulation) are assigned to the characteristic data of the remaining heating circuit or circuits, resp.

## Revendications

1. Procédé pour introduire des données de programme dans un régulateur de chauffage pour l'établissement d'un profil de température ambiant modifiable pendant la durée d'utilisation quotidienne d'une installation de chauffage, l'exploitant de l'installation introduisant pendant la journée à des heures fixes des valeurs de températures souhaitées sur un appareil de régulation et le régulateur de chauffage établissant un profil de base journalier à l'aide des valeurs introduites,
caractérisé en ce que ce profil de base est enregistré ferme après une phase d'apprentissage de quelques jours si, pendant une des journées suivantes environ à la même heure, la même valeur de température est introduite (confirmation), remplacée par une autre valeur de température (correction) ou si, après écoulement d'une certaine période, aucune confirmation ou correction n'a été effectuée.

2. Procédé selon la revendication 1,
caractérisé en ce que l'exploitant de l'installation introduit au cours d'une journée à des heures fixées par lui les valeurs de températures souhaitées pour l'établissement du profil de base journalier.

3. Procédé selon la revendication 2,
caractérisé en ce que le régulateur de chauffage établit et enregistre ferme, à l'aide des valeurs introduites, un profil de base journalier valable pour tous les jours de la semaine ou seulement pour un bloc de jours (jours ouvrables ou jours fériés du week-end) ou uniquement pour le jour en question.

4. Procédé selon les revendications 1 à 3,
caractérisé en ce que la phase d'apprentissage dure autant de jours qu'un profil de base journalier une fois établi à un jour répété (jour suivant ou jour ouvrable suivant identique) puisse être confirmé ou corrigé et que des valeurs, introduites après la phase d'apprentissage, ne servent à la correction du profil de base journalier que si une information expresse est donnée au régulateur, alors qu'au cas contraire ces valeurs ne sont valables que pour la journée de l'introduction.

5. Procédé selon la revendication 1,
caractérisé en ce que, pour la modification de la valeur de consigne fixée par le programme enregistré ferme sous forme du profil de base journalier, un mode de fonctionnement règle par télécommande la température de consigne souhaitée dans une pièce et qu'elle recouvre la valeur du programme et que le recouvrement est annulé au plus tard à la fin du mode de fonctionnement.

6. Procédé selon la revendication 5,
caractérisé en ce que on introduit dans la télécommande, simultanément avec le réglage de la température de consigne souhaitée, une durée pour la validité de cette valeur de consigne.

7. Procédé selon la revendication 1,
caractérisé en ce que, à côté du programme enregistré ferme sous forme d'un profil de base journalier, on établit et enregistre ferme un autre programme de même nature avec des données de programmes différents pour une période de plusieurs jours, de préférence une semaine, et qu'on dispose de la possibilité de commutation périodique d'un programme sur l'autre.

8. Procédé selon la revendication 7,
caractérisé en ce que, lors d'exploitation par équipes, un des programmes est affecté à une des équipes et que, lors de changements périodiques d'équipes, une commutation périodique des programmes s'effectue.

9. Procédé selon la revendication 1,
caractérisé en ce que, avec au moins deux circuits de chauffage, chaque utilisateur signale au régulateur son absence pendant de longues périodes d'absence de certains ou de tous les utilisateurs et que, pendant cette période, l'installation de chauffage ne fonctionne qu'avec les paramètres du ou des circuits de chauffage restants, ou lors d'absence de tous les utilisateurs avec quelques paramètres de base absolument nécessaires.

10. Procédé selon la revendication 9,
caractérisé en ce que tous les paramètres de tous les secteurs communs pour tous les circuits de chauffage (chauffage eau sanitaire et/ou circulation eau chaude) sont affectés aux paramètres du ou des circuits restants.
